# EUROPÄISCHE PATENTSCHRIFT

(11) **EP 2 327 292 B1**
(45) Veröffentlichungstag und Bekanntmachung des Hinweises auf die Patenterteilung: **03.04.2013**
(21) Anmeldenummer: 10450166.3
(22) Anmeldetag: 29.10.2010
(51) Int. Cl.: A01F 25/16

(54) **Vorrichtung zur Silierung von Pflanzenmaterial**
Device for ensiling plant material
Dispositif d'ensilage de matériaux à base de plantes

(30) Priorität: 25.11.2009 EP 09450223
(43) Veröffentlichungstag der Anmeldung: 01.06.2011
(60) Teilanmeldung: 12162472.0
(73) Patentinhaber: Sattler AG, 8041 Graz (AT)
(72) Erfinder: Wiedau, Helmut, 48161 Münster (DE)
(74) Vertreter: Ellmeyer, Wolfgang

(56) Entgegenhaltungen:
- BE-A- 498 144
- DE-A1- 4 407 113
- DE-B- 1 178 634
- DE-C- 683 442
- US-A1- 2003 215 290

## Beschreibung

Die Erfindung betrifft eine Vorrichtung zur Silierung von Pflanzenmaterial.

Silierung bietet die Möglichkeit der Konservierung nachwachsender Rohstoffe, die z.B. in weiterer Folge durch Fermentation die Erzeugung von Biogas ermöglichen.

Beim Silierprozess wird im Siliergut enthaltener Zucker oder Stärke durch Bakterien in Milchsäure und in Essigsäure umgewandelt.

Bisher bekannte Verfahren wenden das Umwickeln von Rundballen mittels Folien an, um den luftdichten Abschluss für die Silage zu gewährleisten.

Bei größeren Mengen ist dieser Wickelvorgang mit einem sehr hohen Material- und Arbeitsaufwand verbunden.

Aus der DE 1 178 634 A ist ein Hochturmsilo bekannt, der an seiner Oberseite eine Abdeckung und im unteren Bereich einen Boden aufweist, der als Rost ausgebildet ist, an dessen Unterseite eine Absaugvorrichtung angeschlossen ist, so dass der Saft, der sich aus der Pressung des im Silo befindlichen Pflanzenmaterials ergibt, über ein als Siphon ausgebildetes Abflussrohr abgeleitet und von der Absaugvorrichtung abgesaugt wird. Somit wird der Sickersaft mit Hilfe des Rostes von dem Silagematerial getrennt und ausgetragen. Charakteristisch für diese Art der Silierung ist die Trennung von festem Material und entstehenden Flüssigkeiten. Das im Silo verbleibende feste Material muss mittels entsprechender Fördervorrichtungen aus dem Silo geholt werden.

Die Errichtung und Befüllung eines Hochturmsilos ist mit einem relativ hohen Aufwand verbunden, es muss für eine entsprechende Abdeckung mit allen damit verbundenen statischen Maßnahmen Sorge getragen werden. Der Hochturmsilo ist nur begrenzt aufnahmefähig und kann nur relativ umständlich bewirtschaftet werden.

Weiters ist in der US 2003/0215290 A1 ein Becken für die Lagerung von kontaminierter Erde und Sedimenten angegeben, das nach oben hin offen und mit einer Abdeckfolie gegenüber dem Untergrund abgedichtet ist. Sickersäfte oder Leckagen werden unterhalb der Beckenabdichtung mittels Drainagerohren aufgefangen, die in einen Pumpschacht münden, der über ein Vertikalrohr abgepumpt wird. Die eigentliche Beckenabdichtung ist aber an sich geschlossen und ohne Sammelkanal ausgebildet. Die angesprochenen Sickersäfte treten infolge von Undichtigkeiten auf, die aber an sich unerwünscht sind. Deren Ableitung ist nur als Sicherheitsmaßnahme gedacht und ist nicht Bestandteil des regulären Betriebs eines solchen Beckens. In der Druckschrift ist keine Entleerungs- bzw. Ausbringmöglichkeit für die im Becken gelagerten Stoffe angegeben, wodurch keine Nutzungsmöglichkeit für die Silierung von großen Materialmengen vorhanden ist, die darüber hinaus im Dokument auch nirgends erwähnt wird. Die Art und Weise der Ausbringung des silierten Materials ist aber ein wesentlicher Faktor beim Betrieb von Silagevorrichtungen.

Aufgabe der Erfindung ist es, eine Vorrichtung zur Silierung der eingangs genannten Art anzugeben, welche für die Konservierung von großen Mengen an Pflanzenmaterial geeignet ist.

Aufgabe der Erfindung ist es weiters, eine Vorrichtung zu schaffen, deren Errichtung und deren Betrieb mit geringem Arbeits- und Materialaufwand möglich ist.

Weiteres Ziel der Erfindung ist es, eine Vorrichtung zur Silierung anzugeben, welche eine einfach handhabbare Bewirtschaftung ermöglicht.

Weiteres Ziel der Erfindung ist es, Vorrichtungen zur Entnahme des silierten Pflanzenmaterials aus der Silagevorrichtung anzugeben, welche den sonst üblichen Aufwand herabsetzen.

Erfindungsgemäß wird dies dadurch erreicht, dass ein flüssigkeitsdichtes Becken mit einer Beckensohle und innen abgeböschten Beckenwänden vorgesehen ist, dass das flüssigkeitsdichte Becken nach oben hin offen ist, und dass in der Beckensohle zumindest ein nach oben hin zumindest teilweise offener Sammelkanal, der in eine Pump-Vertiefung mündet und der kein Gefälle oder ein Gegengefälle in Richtung zur Pump-Vertiefung aufweist, vorgesehen ist, und dass aus der Pump-Vertiefung dort sich ansammelndes Gemisch aus Flüssigkeit und siliertem Pflanzenmaterial abpumpbar bzw. förderbar ist.

Durch die Befüllung des Beckens mit Pflanzenmaterial bzw. Substrat wird dieses durch das Eigengewicht des aufgehäuften Pflanzenmaterials verdichtet und zugleich auch luftdicht abgeschlossen, wodurch die Milchsäureproduktion und somit die Konservierung des Pflanzenmaterials gefördert wird.

Die Beckenwände sind nicht senkrecht ausgeführt, sondern nach innen abgeböscht, um die zu allen Tageszeiten vorhandene UV-Strahlung an das Siliergut gelangen zu lassen, und zwar unabhängig vom Füllstand des Beckens. Durch die gegenüber senkrechten Beckenwänden erzielbare, längere Einstrahlzeit des UV-Lichtes wird Schimmelpilzbildung verhindert.

Weiters werden aufgrund der abgeböschten Becken-Innenwände sonst bei Beckenlagerung auftretende, tiefe und breite Risse in der Substratoberfläche vermieden, da im Verlauf der Entleerung des Beckens durch die schräggestellten Beckenwände die Oberflächenschicht zusammengedrückt bzw. -gestaucht wird. Der Böschungswinkel der Beckenwände kann z.B. bevorzugt im Bereich von 20° bis 60°, besonders bevorzugt 45° sein, ist aber im Rahmen der Erfindung auf keinen bestimmten Bereich festgelegt. Entscheidend ist das Begünstigen des Eindringens von UV-Strahlung in das Siliersubstrat und das Verhindern einer Rissbildung in der Oberfläche des Materials.

Bei senkrechten Beckenwänden, wie sie aus dem Stand der Technik bekannt sind, verbleiben Risse aufgrund der stattfindenden Flüssigkeitsverdunstung etc während des Materialaustragens unverändert bestehen. Diese Risse sind aber unerwünscht, weil in die Risse aufgrund der entstehenden Beschattung kein UV-Licht eindringt und die Folge davon Schimmelbildung ist, die einen negativen Einfluss auf die Biogasproduktion hat oder diese sogar unterdrücken kann.

Weiters weist die Sammelrinne im Beckenboden erfindungsgemäß kein Gefälle oder ein Gegengefälle in Richtung zum Pumpensumpf auf, es handelt sich somit nicht um einen Ableitkanal für sich ausbildende Siliersäfte, wie er aus dem Stand der Technik bekannt ist. Eine zu rasche Ableitung der im Sammelkanal aufgenommenen Flüssigkeit wird auf diese Weise verhindert. Durch das nicht vorhandene Gefälle in Richtung zur Pumpvertiefung bzw. zum Pumpensumpf kommt es zu einem Rückstau, der die ständige Bildung eines Gemisches aus von oben nachrückendem Pflanzenmaterial und der im Sammelkanal vorhandenen Flüssigkeit zur Folge hat. Es bildet sich eine breiige Masse, die dann vorzugsweise über Pumpen ausgetragen werden kann.

Die Sammelrinne ist somit als Schwemmrinne ausgebildet, damit das feste Pflanzenmaterial bzw. Substrat schwimmend zur Entnahmestelle transportiert wird. Nur dadurch ist eine einfache Bewirtschaftung des Silagebeckens möglich, weil die Entnahme an einer bestimmten Stelle des Beckens durch Abpumpen eines Gemisches aus Flüssigkeit und siliertem Pflanzenmaterial erfolgen kann. Die erfindungsgemäße Vorrichtung kann daher in sehr großen Dimensionen, z.B. mit einem Volumen von 10.000 bis 20.000 m³ ausgeführt werden und es ist dennoch gewährleistet, dass mit der Zeit das gesamte silierte Material an einer einzigen Stelle im Becken ausgetragen werden kann.

Eine weitere wesentliche Maßnahme der erfindungsgemäßen Vorrichtung besteht darin, dass keine Abdeckung des Beckens nach oben hin vorgenommen wird, wodurch einerseits das Vorsehen einer, z.B. dachförmigen Abdeckung unnötig und andererseits die Silierung durch Regenwassereintrag durch Anfeuchten der Oberfläche unterstützt wird. Zusätzlich kann bedarfsweise die Silage durch künstliche Beregnung gefördert werden. Das Regenwasser vermischt sich nicht mit der Milchsäure, sondern verbleibt als abdeckender Schutzfilm auf der Silierflüssigkeit und wirkt somit als Emissionsbarriere für das Silagegut selbst. Da keine Verrottung an der Oberfläche stattfindet, entstehen auch keine unerwünschten Emissionen. Das Pflanzenmaterial wird völlig mit Milchsäure durchsetzt und ein pH- Wert z.B. bei Rübenmus von 3,0 bis 3,5 erreicht, wodurch keine Verrottung stattfinden kann. Das Durchsetzen mit Milchsäure wird dadurch begünstigt, dass durch das Vorsehen des als Schwemmrinne ausgebildeten Sammelkanals kein vollständiges Absaugen oder Abrinnen der Pflanzenmaterialsäfte von unten her erfolgt. Anfallendes Regenwasser vermischt sich nicht mit der Milchsäure und verbleibt somit schwimmend über dieser im Bereich der großfaserigen Schicht. Nur in dieser wasserangereicherten Schicht ist eine Verdunstung festzstellen.

Wäre eine Abdeckung des Beckens bzw. der Beckenöffnung vorgesehen, hätte dies den Nachteil, dass immer Luftpolster zwischen der Abdeckung und der Silageoberfläche eingeschlossen würden und aufgrund des Sauerstoffgehaltes eine Verrottung entstünde, welche wiederum zu Emissionen führte, die über Entlüftungsventile nach außen abgeleitet werden müssten, um Überdruck und ein Aufblähen der Abdeckung zu vermeiden.

Nach oben hin benötigt die erfindungsgemäße Vorrichtung somit keine Abdeckung und das Pflanzenmaterial muss auch nicht mit einer Folie umhüllt werden. Die Befüllung mit Pflanzenmaterial kann daher auf einfachste Weise z.B. über ein Förderband automatisch in das nach oben offen Becken erfolgen. Im Becken entstehende Flüssigkeit wird im Sammelkanal gesammelt bzw. gestaut und über die Pumpvertiefung abgepumpt, wobei über das ständig sich nachbildende Gemisch aus Flüssigkeit und Pflanzenmaterial eine stetige Abgabe eines Materialstromes aus dem Becken zum Zwecke der Weiterverarbeitung, z.B. in einem Fermenter, ermöglicht wird, während der verbleibende Rest des Materials im Becken gelagert bleibt.

Eine einfach auszuführende Konstruktion und geringe Baukosten lassen sich erreichen, wenn das flüssigkeitsdichte Becken als Erdbecken ausgebildet ist. Durch Aufbringen einer Kunststoff-Dichtschicht in einer Erdgrube mit Erdwall kann die Flüssigkeitsdichtheit relativ einfach erzielt werden. Bei der Realisierung des flüssigkeitsdichten Beckens als Erdbecken können die Beckenwände und die Beckensohle mit einer aus Dichtmaterialbahnen zusammengeschweißten Dichtungsschicht abgedeckt sein.

Eine weitere Ausführungsform der Erfindung kann darin bestehen, dass das Becken im Wesentlich rechteckförmig ausgebildet ist und der zumindest eine Sammelkanal in Längsrichtung des Beckens verläuft. Die sich im Becken ansammelnde Flüssigkeit kann somit entlang der Länge des Beckens ständig in die Pumpvertiefung abfließen.

Um eine symmetrische Gestaltung der erfindungsgemäßen Vorrichtung zu ermöglichen, kann der zumindest eine Sammelkanal mittig angeordnet sein, so dass eine gleichmäßige Flüssigkeitsaufnahme von beiden Längsseiten des Sammelkanals gewährleistet ist.

Zum Zwecke der einfach durchzuführenden Wartung einer für das Abpumpen verwendeten Pumpvorrichtung kann gemäß einer Ausführungsform der Erfindung die Pump-Vertiefung im Bereich von einem der Längsenden des Beckens angeordnet sein.

Um die innerhalb des Pflanzenmaterials auftretende Flüssigkeit besser in den Sammelkanal abzuleiten, kann gemäß einem weiteren Ausführungsbeispiel der Erfindung die Beckensohle zu beiden Längsseiten des zumindest einen Sammelkanals bzw. der Pump-Vertiefung ein Gefälle quer zur Längsrichtung aufweisen.

Das Abpumpen der in der Pumpvertiefung sich ansammelnden Flüssigkeit kann über eine Pumpvorrichtung geschehen, deren Auslassleitung über den Beckenrand geführt ist.

Weiters kann in der Pumpvertiefung eine Tauchpumpe angeordnet sein, die entlang einer in der Pumpvertiefung angeordneten Stütze vertikal bewegbar ist, und wobei ein Bediensteg vorgesehen ist, der auf der Stütze und am Beckenrand aufgelagert ist. Auf diese Weise kann die Pumpe vom Bediensteg aus gewartet und bedient werden. Die Auslassleitung kann wiederum über die Stütze und den Bediensteg nach außen geführt sein.

Zur Förderung von Pflanzenmaterial im Sammelkanal kann eine Wasser-Spülleitung vorgesehen sein, die in den Sammelkanal einmündet.

Um das Durchspülen über die volle Länge des Sammelkanals zu erleichtern, ist es vorteilhaft, wenn die Wasser-Spülleitung an dem der Pumpvertiefung gegenüberliegenden Ende des Sammelkanals in diesen einmündet.

Ein weiteres Ausführungsbeispiel der Erfindung kann darin bestehen, dass weitere Spülleitungen vorgesehen sind, die mit ihren voneinander beabstandeten Enden im Bereich der Längsseiten des Beckenrandes einmünden, um Pflanzenmaterial in den Sammelkanal oder in die Pumpvertiefung zu spülen. Auf diese Weise kann der Materialtransport aus dem Becken erhöht werden, weil das Material rascher in den Sammelkanal gelangt.

Weiters kann für die erfindungsgemäße Siliervorrichtung eine Entnahmevorrichtung vorgesehen sein, über welche die Mischung aus Flüssigkeit und Pflanzenmaterial ausbringbar ist.

Gemäß einer weiteren Ausführungsform der Erfindung kann die Entnahmevorrichtung eine Förderschnecke umfassen, die mit ihrem Einlass in die Pumpvertiefung ragt und deren Auslass an der Beckenkrone angeordnet ist, wobei die Förderschnecke breiige Silagegut aus der Pumpvertiefung zur Beckenkrone bewegt, wo entweder eine weitere Pumpe oder der Eingang einer weiteren Förderschnecke vorgesehen ist, über die das silierte Material aus dem Becken förderbar ist. Die Förderschnecke ermöglicht einen höheren Förderdurchsatz im Vergleich zur Förderung des Materials mittels Pumpe. Weitere Vorteile sind die auf einfache Art und Weise durchführbare Wartung der Förderschnecke und deren einfache Entnahme aus dem Becken.

Eine andere Variante der Erfindung kann darin bestehen, dass die Entnahmevorrichtung eine Exzenterschneckenpumpe umfasst, die an ihrem Einlass eine Vorrichtung zur Homogenisierung der Mischung aus Flüssigkeit und Pflanzenmaterial und zur Förderung derselben in Richtung Einlass der Exzenterschneckenpumpe aufweist. Die Homogenisierungsvorrichtung mischt die breiige, relativ schwer bewegbare Mischung aus Flüssigkeit und siliertem Pflanzenmaterial durch und erhöht dadurch ihre Fließfähigkeit. Zugleich wird eine Förderbewegung in Richtung des Einlasses der Exzenterschneckenpumpe bewirkt, wodurch eine kontinuierliche Zufuhr von Siliergut ohne Lufteinschlüsse und ein homogener Transport gewährleistet wird.

Die Vorrichtung zur Homogenisierung kann aus mehreren, um eine Drehwelle rotierbaren Einzelflügeln gebildet sein, wobei die Drehwelle mit den rotierbaren Einzelflügeln mit der Drehachse der Exzenterschneckenpumpe im Bereich des Einlasses axial fluchtend gekoppelt ist, sodass der Antrieb der Exzenterschneckenpumpe die Vorrichtung zur Homogenisierung antreibt. Durch die Rotation der Einzelflügel wird die Mischung aus Flüssigkeit und siliertem Pflanzenmaterial in Struktur, Beschaffenheit und Konsistenz homogen. Die Einzelflügel sind dabei so orientiert, dass sich die gewünschte Förderbewegung in Richtung des Einlasses der Exzenterschneckenpumpe erzielen lässt.

Die Vorrichtung zur Homogenisierung kann weiters innerhalb einer rohrstutzenartigen Schutzhülse angeordnet sein, um eine Beschädigung der Becken-Dichtungsschicht durch die Einzelflügel bzw. Rotoren zu verhindern.

Eine weitere Ausführungsform der Erfindung kann darin bestehen, dass die Exzenterschneckenpumpe mit der Vorrichtung zur Homogenisierung in Richtung ihrer gemeinsamen Längsachse und parallel zu einer der abgeböschten Seitenwände zwischen einer Position im Bereich der Pumpvertiefung und einer Position im Bereich der Beckenkrone kontinuierlich verschiebbar und feststellbar ist. Auf diese Weise kann je nach Füllstand des Beckens die geeignete Position gewählt werden, in der die Einlassöffnung der Exzenterschneckenpumpe in das Substrat im Inneren des Beckens eintaucht.

Die Verstellbarkeit der Position der Exzenterschneckenpumpe kann gemäß einer weiteren Variante der Erfindung dadurch erreicht werden, dass diese zusammen mit der Vorrichtung zur Homogenisierung auf einem Rollwagen angeordnet ist, der auf einer der abgeböschten Seitenwände verfahrbar ist und über ein Halteseil in seiner Position arretierbar ist.

Nachfolgend wird die Erfindung anhand der in den Zeichnungen dargestellten Ausführungsbeispiele eingehend erläutert. Es zeigt dabei
Fig.1 eine Draufsicht auf eine Ausführungsform der erfindungsgemäßen Vorrichtung;
Fig.2 einen Schnitt AA quer zur Längsrichtung der Vorrichtung gemäß Fig.1;
Fig.3 einen teilweisen Schnitt BB in Längsrichtung der Vorrichtung gemäß Fig.1;
Fig.4 einen Schnitt CC quer zur Längsrichtung der Vorrichtung gemäß Fig.1;
Fig.5 eine Draufsicht auf eine weitere Ausführungsform der erfindungsgemäßen Vorrichtung;
Fig. 6 einen teilweisen Schnitt BB in Längsrichtung der Vorrichtung gemäß Fig.5;
Fig.7 eine Draufsicht auf eine weitere Ausführungsform der erfindungsgemäßen Vorrichtung;
Fig.8 einen teilweisen Schnitt in Längsrichtung einer weiteren Ausführungsform der erfindungsgemäßen Vorrichtung;
Fig.9 eine schematische Ansicht eines Details der Ausführungsform gemäß Fig.8;
Fig.10 eine schematische Seitenansicht der Ausführungsform gemäß Fig.8;
Fig.11 einen teilweisen Schnitt in Längsrichtung einer weiteren Ausführungsform der erfindungsgemäßen Vorrichtung gemäß Fig.12;
Fig.12 eine teilweise Draufsicht auf die in Fig. 11 gezeigte Vorrichtung;
Fig.13 einen teilweisen Schnitt BB durch die Vorrichtung gemäß Fig.12;
Fig.14 einen teilweisen Schnitt AA durch die Vorrichtung gemäß Fig. 12;
Fig.15 ein Detail der Vorrichtung gemäß Fig.12;
Fig.16 einen teilweisen Schnitt CC durch die Vorrichtung gemäß Fig.12
Fig. 17 einen teilweisen Schnitt in Längsrichtung durch eine weitere Ausführungsform der Erfindung;
Fig.18 eine Seitenansicht des in Fig. 17 gezeigten Rollwagens;
Fig.19 ein Detail der Darstellung in Fig.18;
Fig.20 eine hintere Stirnansicht des Rollwagens einer weiteren Ausführungsform der Erfindung;
Fig.21 eine Schrägansicht des Rollwagens gemäß Fig.20;
Fig. 22 eine vordere Stirnansicht des Rollwagens gemäß Fig.20 und
Fig.23 eine Schrägansicht des Rollwagens gemäß Fig. 20 im Betrieb.

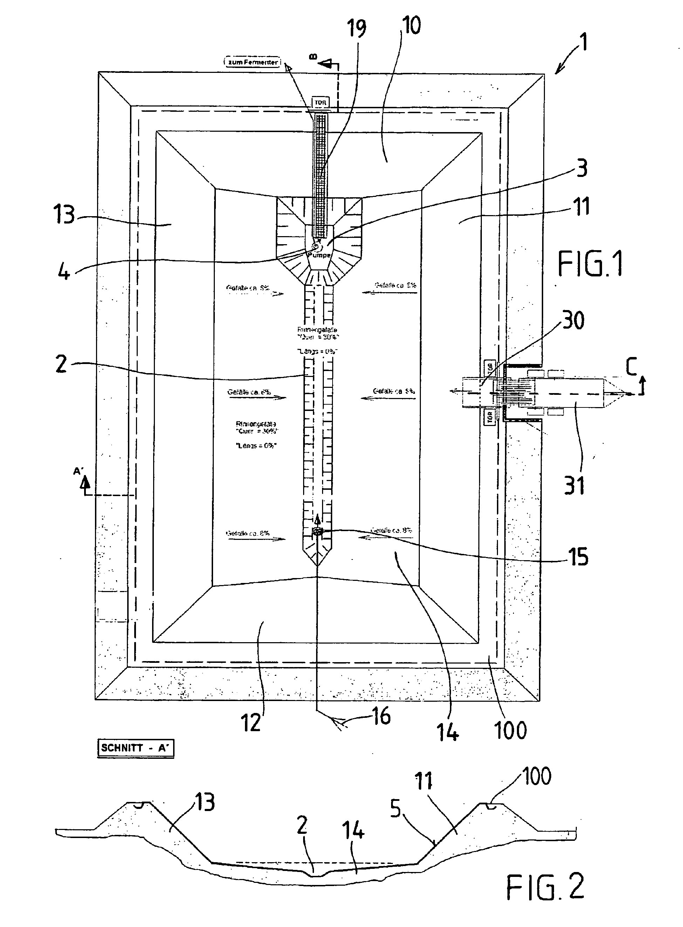

Fig.1 bis 4 zeigen eine Vorrichtung zur Silierung von Pflanzenmaterial, z.B. Zuckerrüben, die erfindungsgemäß ein im Wesentlichen rechteckiges Becken 1 umfasst, das eine Beckensohle 14 aufweist, die von Beckenwänden 10, 11, 12, 13 umgeben ist. Das Becken 1 ist in den gezeigten Ausführungsbeispielen als Erdbecken ausgeführt, kann aber auch in beliebiger anderer Weise, z.B. durch Betonwände realisiert sein.

Erfindungsgemäß weist das flüssigkeitsdichte Becken 1 innen abgeböschte Beckenwände 10, 11, 12, 13 auf und ist nach oben hin offen und somit gegen Niederschlag wie Regen oder Schnee nicht geschützt.

Weiters ist in der Beckensohle 14 ein nach oben hin offener Sammelkanal 2 ausgebildet, der in eine Pump-Vertiefung 3 mündet und der kein Gefälle oder ein Gegengefälle in Richtung zur Pump-Vertiefung 3 aufweist. Es können im Rahmen der Erfindung auch mehrere Sammelkanäle beliebigen Querschnitts mit diesen Eigenschaften ausgebildet sein, die auch teilweise abgedeckt sein können.

Die Beckensohle 14 und die schräg abfallenden Beckenwände 10, 11, 12 und 13 (Fig.2) sind mit einer Dichtungsschicht 5 abgedeckt bzw. abgedichtet, die z.B. aus dicht miteinander verschweißten Polypropylenfolienbahnen gebildet sein kann. Die Dichtungsschicht 5 ist an ihrem oberen Ende an der Beckenkrone umgeschlagen und fixiert. Der Böschungswinkel der Beckenwände 10, 11, 12, 13 ist bevorzugt im Bereich von 20° bis 60°, besonders bevorzugt 45°, um das ganztägige Einfallen der UV-Strahlung zu ermöglichen und die Rissbildung der Substratoberfläche, insbesondere während einer Füllstandverringerung durch Entnahme, hintan zu halten.

Der rinnenförmige Sammelkanal 2 verläuft in Längsrichtung des Erdbeckens 1 und mündet in eine Pump-Vertiefung 3, aus welcher dort sich ansammelndes Gemisch aus Flüssigkeit und siliertem Pflanzenmaterial zur Weiterverarbeitung außerhalb des Erdbeckens 1 abpumpbar bzw. förderbar ist. Fig.2 zeigt das Profil der Beckenwände 11, 13 und der dazwischen liegenden Beckensohle 14 mit dem Sammelkanal 2. Die Beckenkrone 100 ist durch einen umlaufenden Erdwall gebildet.

Der Sammelkanal 2 ist mittig im Erdbecken 1 angeordnet und weist, - wie bereits erwähnt - kein oder ein leichtes Gegen(Konter)gefälle in Richtung zur Pump-Vertiefung 3 auf, die im Bereich eines Längsendes des Erdbeckens 1 angeordnet ist, damit die Flüssigkeit im Sammelkanal 2 nicht schnell abläuft und dann abgepumpt wird - was zur Folge hätte, dass sich Feststoffe absetzen würden - sondern sich ein Flüssigkeitsrückstau ausbildet, in welchem ständig von oben nachrückendes Pflanzenmaterial in der Flüssigkeit in Form von Schwebstoffen weiterbewegt wird, die breiartig zur Pump-Vertiefung 3 gelangen, von wo sie aus dem Becken 1 gepumpt werden.

Weiters weist die Beckensohle 14 zu beiden Längsseiten des Sammelkanals 2 bzw. der Pump-Vertiefung 3 ein Gefälle, z.B. 8%, quer zur Längsrichtung auf. Durch das Quergefälle rutscht das in das Erdbecken z. B. an einer Stelle eingebrachte Pflanzenmaterial, begünstigt durch die glatte Dichtungsschicht 5, in Richtung zum Sammelkanal 2. Lokale Anhäufungen von Pflanzenmaterial verschwinden damit nach einiger Zeit ohne mechanische Hilfe von selbst.

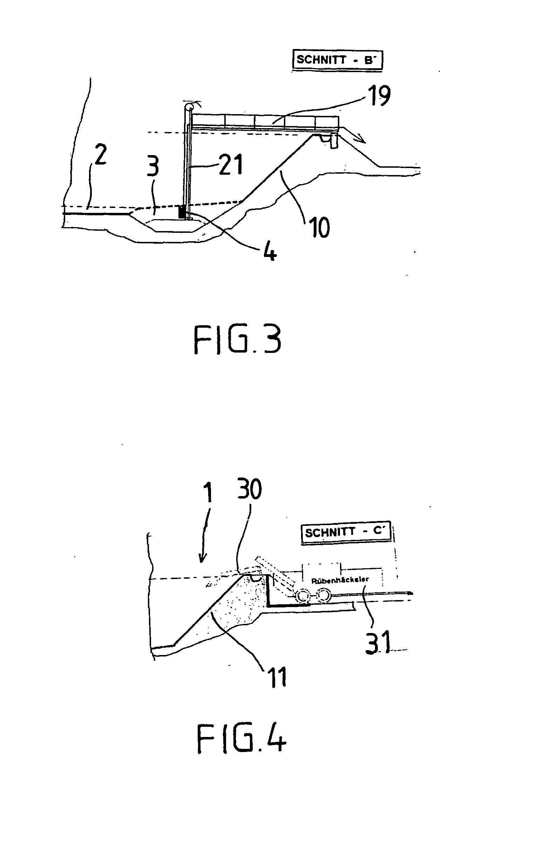

In der Pumpvertiefung 3 ist eine Tauchpumpe 4 angeordnet, die entlang einer in der Pumpvertiefung 3 angeordneten Stütze 21 (Fig.3) vertikal bewegbar ist. Die Stütze 21 ist auf einem Betonfundament innerhalb der Pumpvertiefung 3 abgestützt. Zur Wartung und Bedienung der Tauchpumpe 4 ist ein Bediensteg 19 vorgesehen, der auf der Stütze 21 und am gegenüberliegenden Beckenrand aufgelagert ist. Die Auslassleitung der Tauchpumpe 4 ist entlang der Stütze 21 und dem Bediensteg 19 geführt (Pfeil). Die Tauchpumpe 4 ist vorzugsweise auf einer solchen Höhe innerhalb der Pumpvertiefung 3 angeordnet, dass ihr Einlass weder ganz auf dem Grund noch auf der Höhe des Flüssigkeitsspiegels angeordnet ist, um möglichst viele Schwebstoffe innerhalb der Flüssigkeit von der Tauchpumpe 4 einzusaugen.

Während des Betriebs der erfindungsgemäßen Vorrichtung wird das zu silierende Pflanzenmaterial, z.B. von einem Rübenhäcksler 31 (Fig.1, 4) in Form von Schnetzeln über eine Rutsche 30 in das Erdbecken 1 gefördert und dort unter Ausbildung eines (nicht dargestellten) Schüttkegels aufgehäuft, der durch die Materialausgleichsbewegung nach einiger Zeit von selbst verschwindet.

Die erforderliche Verdichtung und der luftdichte Abschluss des Pflanzenmaterials kommt durch das Eigengewicht des aufgehäuften Materials zustande. Durch die auf diese Weise in Gang gesetzte Milchsäuregärung entsteht das konservierte bzw. silierte Pflanzenmaterial, das gegen Verrotten dadurch geschützt ist, dass sich an der Oberfläche des im Erdbeckens 1 vorhandenen Pflanzenmaterials eine Schutzschicht bildet, die das Eindringen von Sauerstoff ohne Abdeckmaßnahmen verhindert.

Durch die Konservierung des Pflanzenmaterials kann dieses für einige Zeit, z.B. 3 bis 12 Monate, zwischengelagert werden, während Teile davon einer Verwertung z.B. in einer Biogasanlage ständig zugeführt wird.

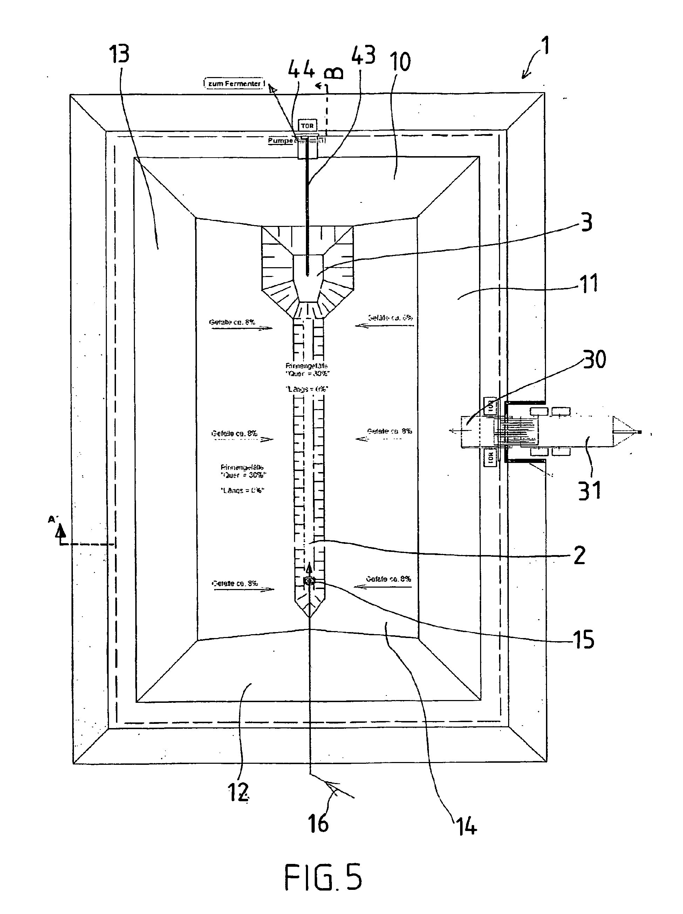

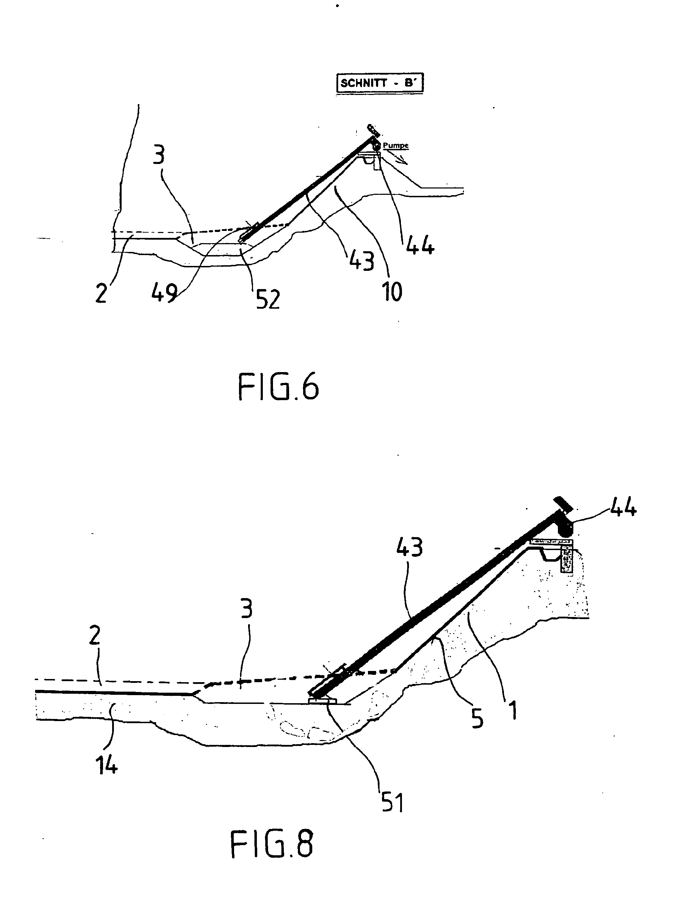

Fig.5, 6 zeigen eine weitere Ausführungsform einer erfindungsgemäßen Vorrichtung. Über eine Wasser-Spülleitung 16, die an dem der Pumpvertiefung 3 gegenüberliegenden Ende des Sammelkanals 2 in diesen einmündet, kann der Sammelkanal 2 durchgespült werden, um Pflanzenmaterial in Richtung der Pumpvertiefung 3 zu fördern. Durch regelmäßiges Spülen mittels der Spülleitung 16 wird ein Materialstau im Sammelkanal 2 verhindert.

Gemäß dem in Fig.5 und 6 gezeigten Ausführungsbeispiel mündet eine Entnahmevorrichtung in Form einer Rohr-/Trogschnecke 43 mit ihrem Einlass in die Pumpvertiefung 3 und fördert das aus dem Sammelkanal 2 angeschwemmte Pflanzenmaterial entlang der Beckenwand 10 schräg nach oben zur Beckenkrone. Sie mündet dort mit ihrem Auslass zur Übergabe des Fördergutes zwecks Weiterbeförderung in eine weitere Pumpe 44. Im Bereich des Einlasses ist die Rohr/Trogschnecke 43 auf einem Betonsockel 52 abgestützt, um die Dichtungsschicht 5 nicht zu verletzen.

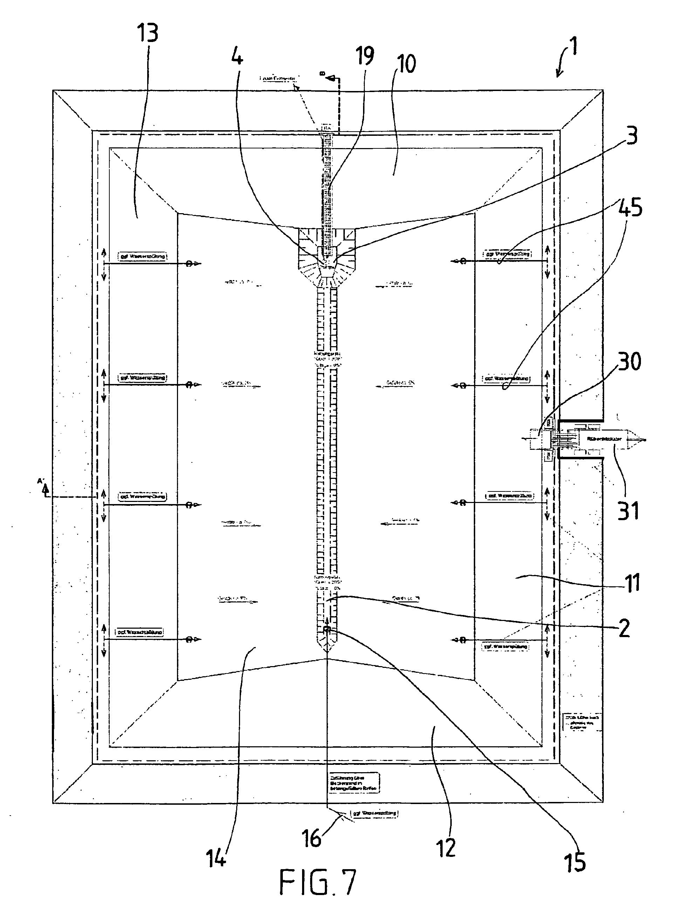

Gemäß dem in Fig.7 gezeigten Ausführungsbeispiel sind weitere Spülleitungen 45 vorgesehen, die mit ihren voneinander beabstandeten Enden im Bereich der Längsseiten des Beckens 1 einmünden, um aus dem gelagerten Pflanzenmaterial mittels Wasser Substrat in den Sammelkanal 2 oder in die Pumpvertiefung 3 zu spülen oder zu fördern. Die Flüssigkeitszufuhr über die Spülleitungen 45 kann dabei über Stellschieber gesteuert sein.

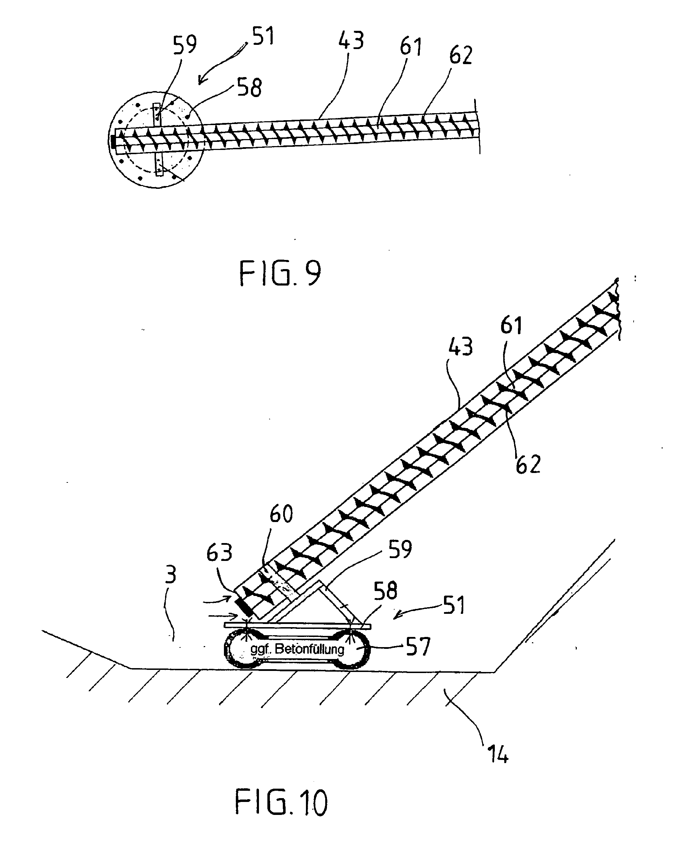

Fig.8, 9 und 10 zeigen eine weitere Ausführungsform der Erfindung, bei der das untere Ende der Rohr/Trogschnecke 43 auf einem auf der Dichtungsschicht 5 in der Pumpvertiefung 3 aufliegenden Altreifen 51 mit Betonfüllung 57 abgestützt ist. Der Altreifen 51 trägt eine kreisrunde Platte 58, auf welcher ein Haltegestell 59 mit einem Haltering 60 vorgesehen ist, in welchem die Rohr/Trogschnecke 43 gehalten ist. Auf diese Weise ist ein mobiles Auflager für die Rohr/Trogschnecke 43 realisiert, durch welche die Dichtungsschicht 5 vor Beschädigung geschützt ist. Zugleich kann auf die Schaffung einer feststehenden Betonaufschüttung an dieser Stelle verzichtet werden. Über einen Einlass 63 der Rohr/Trogschnecke 43 wird infolge der Drehbewegung einer Welle 61 mit einem Schneckengewinde 62 das Gemisch aus Flüssigkeit und siliertem Pflanzenmaterial (Pfeile) aus der Pumpvertiefung 3 nach oben befördert.

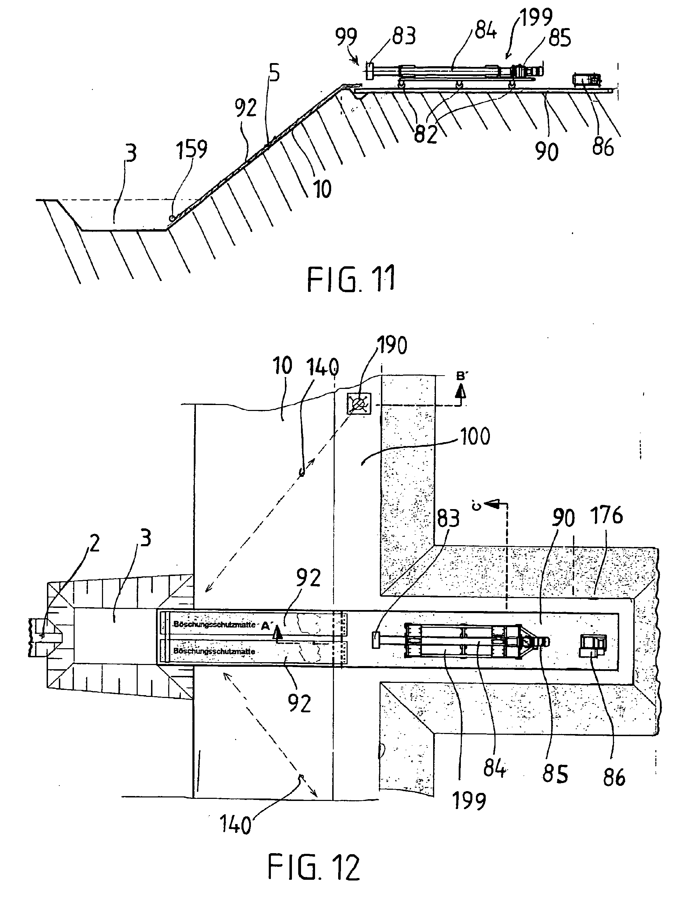

Fig.11 und 12 zeigen eine weitere Ausführungsform der erfindungsgemäßen Vorrichtung, bei der die Entnahmevorrichtung durch eine Exzenterschneckenpumpe 84 in einem rohrförmigen Gehäuse gebildet ist, die auf einem Rollwagen 199 mit Rollen 82 verfahrbar gelagert ist.

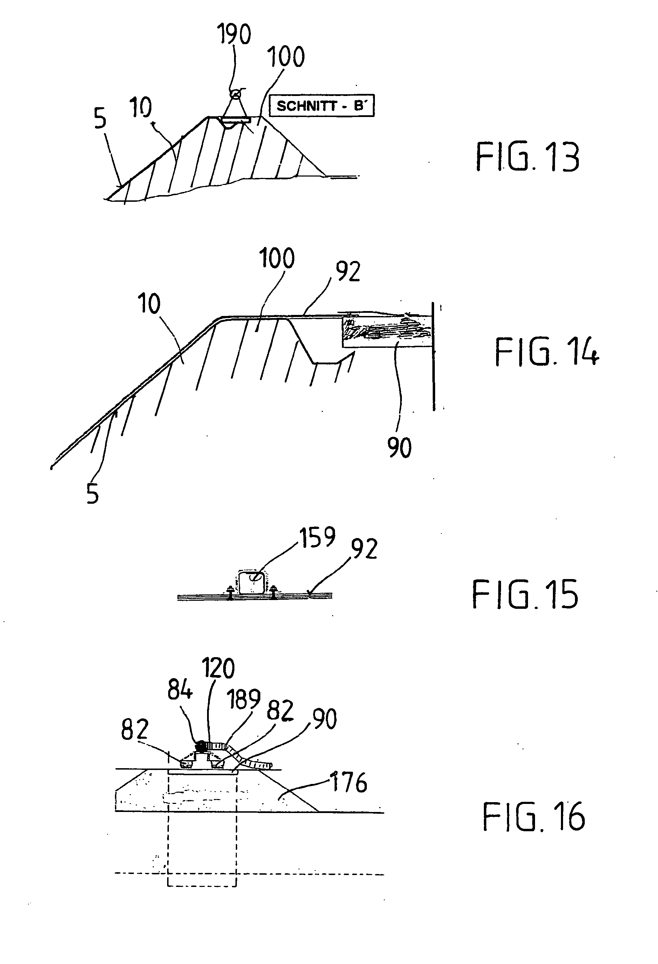

An ihrem Einlass 99 weist die Exzenterschneckenpumpe 84 eine Vorrichtung zur Homogenisierung 83 auf, mit der das im Becken 1 vorhandene Siliergut, das eine Mischung aus Flüssigkeit und Pflanzen material ist, gemischt und in Richtung des Einlasses 99 gefördert wird. In Fig. 11 und 12 ist die Exzenterschneckenpumpe 84 in einer waagrechten Servicestellung eingezeichnet, in der sie gewartet werden kann. In dieser Servicestellung ruht die Exzenterschneckenpumpe 84 auf einem rechteckförmigen Wagen-Betonfundament 90 (Fig.16), das auf einem verdichteten Erdwall 176 vorgesehen ist. Aus dieser Position kann sie über die abgeböschte Wand 10 des Beckens 1 in ihre Arbeitsstellung im Bereich der Pumpvertiefung 3 gebracht werden, sodass sie z.B. mit ihren vorderen Rollen 82 an einem Anschlag 159 ansteht und in das aus Flüssigkeit und siliertem Pflanzenmaterial bestehende Substrat eintaucht. Sobald dies geschehen ist, kann die Homogenisierungsvorrichtung das in ihrem Bereich vorhandene Substrat durchmischen und dem Einlass 99 der Exzenterschneckenvorrichtung 84 zuführen.

Fig.13 zeigt eine Handseilwinde 190 im Detail, mit der über ein Halteseil 140 der Rollwagen 199 mit der Exzenterschneckenpumpe 84 entlang der abgeböschten Wand 10 in seine Arbeitsposition gebracht und dort fixiert werden kann. In Fig.12 ist in symmetrischer Position eine weitere, nicht dargestellte Handseilwinde vorgesehen, über die ein weiteres Halteseil 140 abgewickelt und eingeholt werden kann.

Zum Schutz der Dichtungsschicht 5 sind zwei Böschungsmatten 92 vorgesehen, auf denen die Rollen 82 des Rollwagens 199 geführt sind. Anstelle des Rollwagens 199 könnte z.B. auch ein Schlitten in einer Förderschiene als Mittel zur Bewegung der Exzenterschneckenpumpe 84 oder ein funktionsgleiches Mittel vorgesehen sein. Fig.14 zeigt den Übergang vom Wagen-Betonfundament 90 zur Beckenkrone 100 und zur abgeböschten Wand 10.

In Fig.15 ist eine Ausführungsform des Anschlags 159 gezeigt, der aus einem mit einer Folie umhüllten Stab gebildet ist.

Fig.16 zeigt einen seitlich von der Exzenterschneckenpumpe 84 wegführenden Schlauch 189, der an den Auslass 120 der Exzenterschneckenpumpe 84 angeschlossen ist und über welchen die aus dem Becken 1 gepumpte Mischung aus Flüssigkeit und Siliergut zur weiteren Verarbeitung weitergefördert wird.

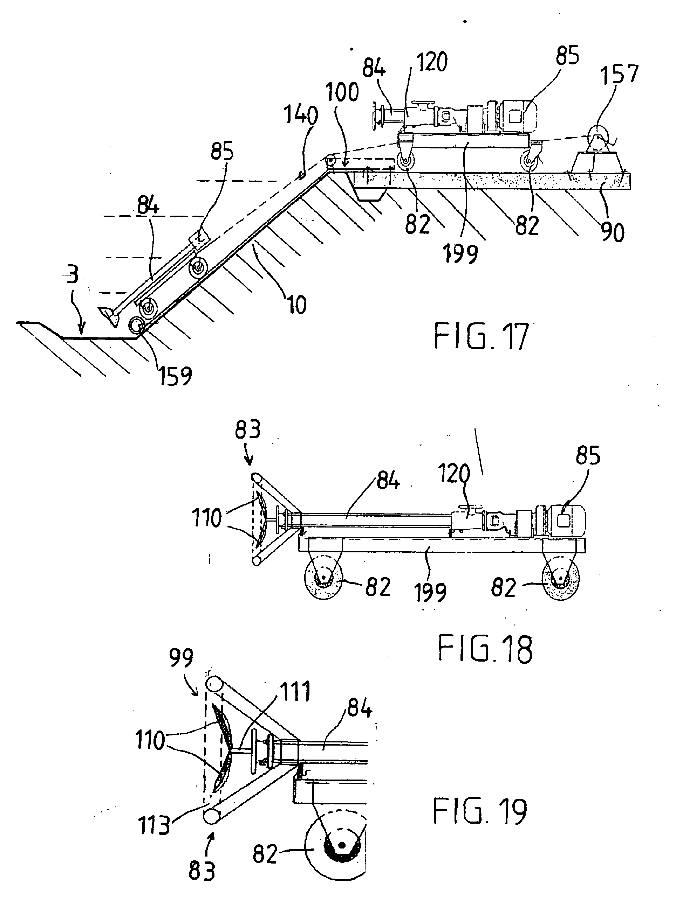

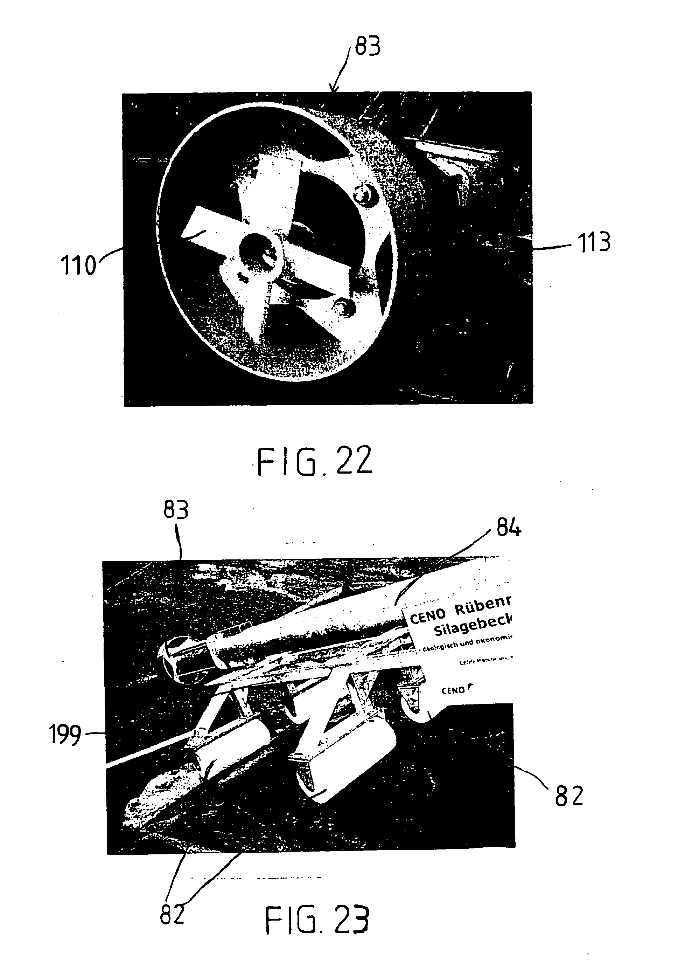

Fig.17, 18 und 19 zeigen eine weitere Ausführungsform der Erfindung, die jener der Fig.11 und 12 sehr ähnlich ist, aus welchen der innere Aufbau der Vorrichtung zur Homogenisierung 83 ersichtlich ist, die aus mehreren, vorzugsweise zwei bis vier, um eine Drehwelle 111 rotierbaren Einzelflügeln 110 (Fig.19) gebildet ist. Fig.22 zeigt z.B. eine mit vier Einzelflügeln 110 in kreuzförmiger Anordnung ausgestattete Homogenisierungsvorrichtung 83, die das im Bereich der Einzelflügel 110 vorhandene Gemisch aus Flüssigkeit und Pflanzenmaterial mischt bzw. homogenisiert und zugleich in die Einlassöffnung 99 der Exzenterschneckenpumpe 84 bewegt.

Die Drehwelle 111, welche die rotierbaren Einzelflügel 110 trägt, ist mit der nicht ersichtlichen Drehachse der Exzenterschneckenpumpe 84 im Bereich des Einlasses 99 axial fluchtend gekoppelt, sodass der Antrieb der Exzenterschneckenpumpe 84 die Vorrichtung zur Homogenisierung 83 antreibt, die innerhalb einer rohrstutzenartigen Schutzhülse 113 angeordnet ist. Ein Motor 85 bildet den Antrieb der Exzenterschneckenpumpe 84 und ist an deren auslassseitigem Ende angeordnet und treibt die im rohrförmigen Gehäuse der Exzenterschneckenpumpe 84 in axialer Richtung verlaufende Drehachse an, die ihrerseits die Vorrichtung zur Homogenisierung 83 antreibt. Die Exzenterschnecke mit zwei oder drei Windungen ist innerhalb des rohrförmigen Gehäuses am einlassseitigen Ende angeordnet. Der verbleibende Rest des rohrförmigen Gehäuses dient der Weiterleitung des gepumpten Materials.

Die Exzenterschneckenpumpe 84 ist gemeinsam mit der Vorrichtung zur Homogenisierung 83 in Richtung ihrer gemeinsamen Längsachse und parallel zu einer der abgeböschten Seitenwände 10 zwischen einer Position im Bereich der Pumpvertiefung 3 und einer Position im Bereich der Beckenkrone 100 kontinuierlich bewegbar. In einer geeigneten Höhe des Einlasses 99 kann der Rollwagen 199 arretiert werden und danach mit der Ausbringung des Substrates begonnen werden.

Fig.17 zeigt die Exzenterschneckenpumpe 84 zweimal, und zwar einmal auf der rechten Seite in der waagrechten Servicestellung auf dem Niveau der Beckenkrone 100 und einmal auf der linken Seite in Arbeitsstellung, in der sie bis an das Anschlagelement 159 anstoßend, das am Ende der Böschungsschutzmatten angeordnet ist, entlang der abgeböschten Seitenwand 10 mittels des Halteseils 140 und einer Seilwinde 157 herabgelassen ist, sodass die Einlassöffnung 99 der Exzenterschneckenpumpe 84 in die Pumpvertiefung 3 ragt. In dieser Stellung kann die Mischung aus Flüssigkeit und Pflanzenmaterial abgepumpt werden.

Zu diesem Zweck ist die Exzenterschneckenpumpe 84 zusammen mit der Vorrichtung zur Homogenisierung 83 auf dem Rollwagen 199 angeordnet, der auf einer der abgeböschten Seitenwände 10 verfahrbar ist und über ein Halteseil 140 je nach Füllstand des Silagebeckens in einer Position arretierbar ist, in der Flüssigkeit und Pflanzenmaterial ausgetragen werden kann. An den seitlichen Auslass 120 kann ein Rohr oder ein Schlauch angeschlossen werden, um das gepumpte Material weiterzubefördern.

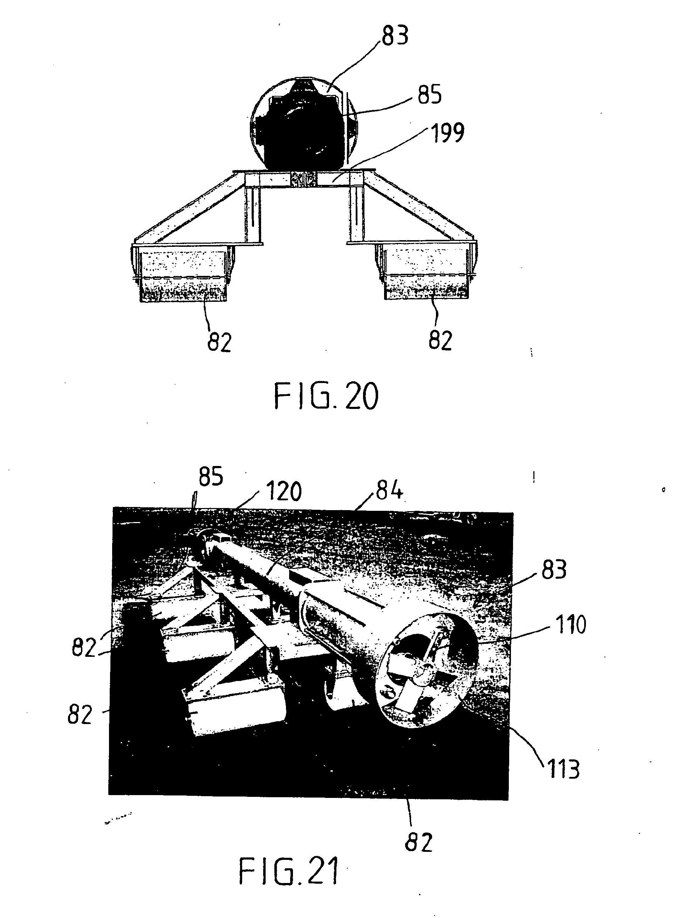

Fig.20 bis 23 zeigt eine weitere Ausführungsform der erfindungsgemäßen Vorrichtung, bei der die Exzenterschneckenpumpe 84 auf dem aus einem Rahmen gebildeten Rollwagen 199 befestigt ist, der auf drei Rollenpaaren 82 verschiebbar gelagert ist. Fig.23 zeigt die in die Arbeitsstellung herabgelassene Exzenterschneckenpumpe 84, in der sie in das Substrat eintaucht.

## Patentansprüche

1. Vorrichtung zur Silierung von Pflanzenmaterial, wobei ein flüssigkeitsdichtes Becken (1) mit einer Beckensohle (14) und innen abgeböschten Beckenwänden (10, 11, 12, 13) vorgesehen ist, wobei das flüssigkeitsdichte Becken (1) nach oben hin offen ist, und wobei in der Beckensohle (14) zumindest ein nach oben hin zumindest teilweise offener Sammelkanal (2), der in eine Pump-Vertiefung (3) mündet und der kein Gefälle oder ein Gegengefälle in Richtung zur Pump-Vertiefung (3) aufweist, vorgesehen ist, und wobei aus der Pump-Vertiefung (3) dort sich ansammelndes Gemisch aus Flüssigkeit und siliertem Pflanzenmaterial abpumpbar bzw. förderbar ist.

2. Vorrichtung nach Anspruch 1, **dadurch gekennzeichnet, dass** der Böschungswinkel der Beckenwände (10, 11, 12, 13) bevorzugt im Bereich von 20° bis 60°, besonders bevorzugt 45° ist.

3. Vorrichtung nach Anspruch 1, **dadurch gekennzeichnet, dass** das flüssigkeitsdichte Becken ein Erdbecken ist.

4. Vorrichtung nach Anspruch 1, 2 oder 3, **dadurch gekennzeichnet, dass** der zumindest eine Sammelkanal (2) in Längsrichtung des Beckens (1) verläuft.

5. Vorrichtung nach Anspruch 1, 2 oder 3, **dadurch gekennzeichnet, dass** der zumindest eine Sammelkanal (2) mittig angeordnet ist.

6. Vorrichtung nach einem der Ansprüche 1 bis 5, **dadurch gekennzeichnet, dass** die Pump-Vertiefung (3) im Bereich von einem der Längsenden des Beckens (1) angeordnet ist.

7. Vorrichtung nach einem der Ansprüche 1 bis 6, **dadurch gekennzeichnet, dass** die Beckensohle (14) zu beiden Längsseiten des zumindest einen Sammelkanals (2) bzw. der Pump-Vertiefung (3) ein Gefälle quer zur Längsrichtung aufweist.

8. Vorrichtung nach einem der Ansprüche 1 bis 7, **dadurch gekennzeichnet, dass** in der Pumpvertiefung (3) eine Tauchpumpe (4) angeordnet ist, die entlang einer in der Pumpvertiefung (3) angeordneten Stütze (21) vertikal bewegbar ist, und dass ein Bediensteg (19) vorgesehen ist, der auf der Stütze (21) und am Beckenrand aufgelagert ist.

9. Vorrichtung nach einem der Ansprüche 1 bis 8, **dadurch gekennzeichnet, dass** eine Wasser-Spülleitung (16) vorgesehen ist, die in den Sammelkanal (2) einmündet.

10. Vorrichtung nach Anspruch 9, **dadurch gekennzeichnet, dass** die Wasser-Spülleitung (16) an dem der Pumpvertiefung (3) gegenüberliegenden Ende des Sammelkanals in diesen einmündet.

11. Vorrichtung nach einem der vorhergehenden Ansprüche 1 bis 10, **dadurch gekennzeichnet, dass** weitere Spülleitungen (45) vorgesehen sind, die mit ihren voneinander beabstandeten Enden im Bereich der Längsseiten des Beckens einmünden, um Pflanzenmaterial in den Sammelkanal (2) oder in die Pumpvertiefung (3) zu spülen.

12. Vorrichtung nach einem der Ansprüche 1 bis 11, **dadurch gekennzeichnet, dass** die Beckenwände (10, 11, 12, 13) und die Beckensohle (14) mit einer Dichtungsschicht (5) abgedeckt sind.

13. Vorrichtung nach einem der Ansprüche 1 bis 12, **dadurch gekennzeichnet, dass** eine Entnahmevorrichtung (43, 44) vorgesehen ist, über welche die Mischung aus Flüssigkeit und Pflanzenmaterial ausbringbar ist.

14. Vorrichtung nach Anspruch 13, **dadurch gekennzeichnet, dass** die Entnahmevorrichtung eine Förderschnecke (43) umfasst, die mit ihrem Einlass in die Pumpvertiefung (3) ragt und deren Auslass an der Beckenkrone (100) angeordnet ist, wobei die Förderschnecke (43) Flüssigkeit und Pflanzenmaterial aus der Pumpvertiefung (3) zur Beckenkrone (100) bewegt, wo entweder eine weitere Pumpe (44) oder der Eingang einer weiteren Förderschnecke vorgesehen ist, über die das Fördergut aus dem Becken (1) förderbar ist.

15. Vorrichtung nach Anspruch 13, **dadurch gekennzeichnet, dass** die Entnahmevorrichtung eine Exzenterschneckenpumpe (84) umfasst, die an ihrem Einlass (99) eine Vorrichtung zur Homogenisierung (83) der Mischung aus Flüssigkeit und Pflanzenmaterial und zur Förderung derselben in Richtung Einlass (99) der Exzenterschneckenpumpe (84) aufweist.

16. Vorrichtung nach Anspruch 15, **dadurch gekennzeichnet, dass** die Vorrichtung zur Homogenisierung (83) aus um eine Drehwelle (111) rotierbaren Einzelflügeln (110) gebildet ist, wobei die Drehwelle (111) mit den rotierbaren Einzeiflügeln (110) mit der Drehachse der Exzenterschneckenpumpe (84) im Bereich des Einlasses (99) axial fluchtend gekoppelt ist, sodass der Antrieb der Exzenterschneckenpumpe (84) die Vorrichtung zur Homogenisierung (83) antreibt.

17. Vorrichtung nach Anspruch 15 oder 16, **dadurch gekennzeichnet, dass** die Vorrichtung zur Homogenisierung (83) innerhalb einer rohrstutzenartigen Schutzhülse (113) angeordnet ist.

18. Vorrichtung nach einem der Ansprüche 15 bis 17, **dadurch gekennzeichnet, dass** die Exzenterschneckenpumpe (84) mit der Vorrichtung zur Homogenisierung (3) in Richtung ihrer gemeinsamen Längsachse und parallel zu einer der abgeböschten Seitenwände (10) zwischen einer Position im Bereich der Pumpvertiefung (3) und einer Position im Bereich der Beckenkrone (100) kontinuierlich verschiebbar ist.

19. Vorrichtung nach Anspruch 18, **dadurch gekennzeichnet, dass** die Exzenterschneckenpumpe (84) mit der Vorrichtung zur Homogenisierung (83) auf einem Rollwagen (199) angeordnet ist, der auf einer der abgeböschten Seitenwände (10) verfahrbar ist und über ein Halteseil in seiner Position arretierbar ist.

## Claims

1. A device for ensiling plant materials, wherein a liquid-tight reservoir (1) comprising a reservoir bottom (14) and reservoir walls (10, 11, 12, 13) which are sloped at the interior side is provided, wherein said liquid-tight reservoir (1) is open at the top and at least one collecting channel (2), which is at least partially open at the top and leads to a pump recess (3) and does not have any slope or counterslope in the direction towards said pump recess (3), is provided in the reservoir bottom, wherein it is possible to pump or transport a mixture of liquids and ensiled plant materials accumulating in said pump recess (3) out of said pump recess (3).

2. The device according to claim 1, **characterised in that** the slope angle of the reservoir walls (10, 11, 12, 13) preferably ranges from 20° to 60° and is particularly preferred to be 45°.

3. The device according to claim 1, **characterised in that** the liquid-tight reservoir is embedded in the ground.

4. The device according to any one of the claims 1, 2 or 3, **characterised in that** said at least one collecting channel (2) extends in the longitudinal direction of the reservoir (1).

5. The device according to any one of the claims 1, 2 or 3, **characterised in that** said at least one collecting channel (2) is located at the centre of the reservoir.

6. The device according to any one of the claims 1 to 5, **characterised in that** said pump recess (3) is located in the area of one of the longitudinal ends of the reservoir (1).

7. The device according to any one of the claims 1 to 6, **characterised in that**, at both longitudinal sides of the at least one collecting channel (2) and the pump recess (3), the reservoir bottom (14) slopes transversely to longitudinal direction.

8. The device according to any one of the claims 1 to 7, **characterised in that** a submerged pump (4), which can be vertically displaced along a support (21) placed in the pump recess (3), is arranged in said pump recess (3) and **in that** a service platform (19) is provided, supported by said support (21) and the reservoir's edge.

9. The device according to any one of the claims 1 to 8, **characterised in that** a water flushing pipe (16) leading into the collecting channel (2) is provided.

10. The device according to claim 9, **characterised in that** said water flushing pipe (16) leads into the collecting channel at its end opposite the pump recess (3).

11. The device according to any one of the claims 1 to 10, **characterised in that** additional flushing pipes (45) are provided with their spaced apart ends leading into the reservoir at its longitudinal sides, in order to flush plant materials into the collecting channel (2) or into the pump recess (3).

12. The device according to any one of the claims 1 to 11, **characterised in that** the reservoir walls (10, 11, 12, 13) and the reservoir bottom (14) are covered by an liquid-proof layer (5).

13. The device according to any one of the claims 1 to 12, **characterised in that** a withdrawal device (43, 44) is provided for withdrawing the mixture of liquids and plant materials.

14. The device according to claim 13, **characterised in that** said withdrawal device comprises a conveyor screw (43) whose inlet extends into the pump recess (3) and whose outlet is arranged at the reservoir's crest (100), said conveyor screw (43) transporting liquids and plant materials out of the pump recess (3) towards the reservoir's crest (100), where either a further pump (44) or an inlet of another conveyor screw, which then transports the conveyed material out of the reservoir (1), is provided.

15. The device according to claim 13, **characterised in that** said withdrawal device comprises an eccentric screw pump (84) which, at its inlet (99), has a device for homogenising (83) the mixture of liquids and plant materials and for transporting said mixture towards the inlet (99) of said eccentric screw pump (84).

16. The device according to claim 15, **characterised in that** said homogenising device (83) consists of individual blades (110) rotating around a rotary shaft (111), said rotary shaft (111) with said rotatable individual blades (110) being axially aligned with the rotary axis of the eccentric screw pump (84) in the area of the inlet (99), so that the drive of said eccentric screw pump (84) also drives the homogenising device (83).

17. The device according to claim 15 or claim 16, **characterised in that** said homogenising device (83) is arranged within a pipe-socket-like protective cover (113).

18. The device according to any one of the claims 15 to 17, **characterised in that** the eccentric screw pump (84) can be continually displaced together with the homogenising device (83) in the direction of their common longitudinal axis and parallel to one of the sloped side walls (10), between a position in the area of the pump recess (3) and a position in the area of the reservoir's crest (100).

19. The device according to claim 18, **characterised in that** said eccentric screw pump (84) is arranged on a rolling cart (199) together with the homogenising device (83), said rolling cart (199) being movable on one of the sloped side walls (10) and arrestable in its position by means of a rope.

## Revendications

1. Dispositif pour ensiler des matières végétales, prévu avec un réservoir (1) étanche aux liquides comprenant un fond de réservoir (14) et des parois de réservoir (10, 11, 12, 13), qui sont talutées à l'intérieur, ledit réservoir (1) étanche aux liquides étant ouvert vers le haut et au moins un canal collecteur (2), qui est au moins partiellement ouvert vers le haut et mène à un creux (3) pour une pompe et n'a pas d'inclinaison ou d'inclinaison inverse dans la direction vers ledit creux (3) pour la pompe, étant prévu dans le fond de réservoir (14), où il est possible de pomper ou transporter dudit creux (3) pour la pompe un mélange de liquides et de matières végétales ensilées, accumulant dans ledit creux (3) pour la pompe.

2. Dispositif selon la revendication 1, **caractérisé en ce que** l'angle du talus des parois de réservoir (10, 11, 12, 13) est de préférence 20° à 60° et notamment 45°.

3. Dispositif selon la revendication 1, **caractérisé en ce que** le réservoir étanche aux liquides est un réservoir enfoncé dans le sol.

4. Dispositif selon l'une des revendications 1, 2 ou 3, **caractérisé en ce que** ledit au moins un canal collecteur (2) s'étend dans la direction longitudinale du réservoir.

5. Dispositif selon l'une des revendications 1, 2 ou 3, **caractérisé en ce que** ledit au moins un canal collecteur (2) se trouve au centre du réservoir.

6. Dispositif selon l'une des revendications 1 à 5, **caractérisé en ce que** ledit creux (3) pour la pompe se trouve près de l'un des bouts longitudinaux du réservoir (1).

7. Dispositif selon l'une des revendications 1 à 6, **caractérisé en ce que** le fond de réservoir (14) est incliné dans une direction transversale par rapport à la direction longitudinale aux deux côtés longitudinaux dudit au moins un canal collecteur (3) et dudit creux (3) pour la pompe.

8. Dispositif selon l'une des revendications 1 à 7, **caractérisé en ce qu'**une pompe plongeante (4), qui peut être déplacée verticalement le long d'un support (21) arrangé dans le creux (3) pour la pompe, est disposée dans ledit creux (3) pour la pompe et **en ce qu'**une passerelle de service (19) est prévu, supportée par ledit support (21) et le bord du réservoir.

9. Dispositif selon l'une des revendications 1 à 8, **caractérisé en ce qu'**une conduite de rinçage à l'eau (16), qui aboutit dans le canal collecteur (2), est prévue.

10. Dispositif selon la revendication 9, **caractérisé en ce que** ladite conduite de rinçage à l'eau (16) aboutit dans le canal collecteur (2) à ce bout de ceci qui se trouve opposé au creux (3) pour la pompe.

11. Dispositif selon l'une des revendications 1 à 10, **caractérisé en ce que** des conduites de rinçage (45) additionnelles sont prévues, leurs bouts écartés aboutissant dans le réservoir à travers ses côtés longitudinales, pour faire passer des matières végétales dans le canal collecteur (2) ou dans le creux (3) pour la pompe.

12. Dispositif selon l'une des revendications 1 à 11, **caractérisé en ce que** les parois de réservoir (10, 11, 12, 13) et le fond de réservoir (14) sont recouverts d'une couche (5) étanche aux liquides.

13. Dispositif selon l'une des revendications 1 à 12, **caractérisé en ce qu'**un dispositif de prélèvement (43, 44) est prévu pour prélever le mélange de liquides et de matières végétales.

14. Dispositif selon la revendication 13, **caractérisé en ce que** ledit dispositif de prélèvement comprend un transporteur à vis (43), l'orifice d'admission duquel s'étend dans le creux (3) pour la pompe et la sortie du quel est disposée à la couronne (100) du réservoir, ledit transporteur à vis (43) transportant des liquides et des matières végétales du creux (3) pour la pompe vers la couronne (100) du réservoir, où une autre pompe (44) ou un orifice d'admission d'un autre transporteur à vis, qui transportent la matière transportée hors du réservoir (1), est prévu(e).

15. Dispositif selon la revendication 13, **caractérisé en ce que** ledit dispositif de prélèvement comprend une pompe à vis excentrée (84) qui, à son orifice d'admission, comporte un dispositif pour homogénéiser (83) le mélange de liquides et de matières végétales et pour transporter ledit mélange vers l'orifice d'admission (99) de ladite pompe à vis excentrée (84).

16. Dispositif selon la revendication 15, **caractérisé en ce que** ledit dispositif d'homogénéisation (83) comprend des pales individuelles (110) qui tournent autour un arbre rotatif (111), lesdites pales individuelles rotatives (110) étant axialement alignées par rapport à l'axe rotatif de la pompe à vis excentrée (84) près de l'orifice d'admission, ainsi que l'entraînement de ladite pompe à vis excentrée (84) entraîne le dispositif d'homogénéisation (83).

17. Dispositif selon la revendication 15 ou 16, **caractérisé en ce que** ledit dispositif d'homogénéisation (83) est disposé dans un revêtement protectif en forme d'une tubulure.

18. Dispositif selon l'une des revendications 15 à 17, **caractérisé en ce que** la pompe à vis excentrée (84) peut être déplacée de manière continue avec le dispositif d'homogénéisation (83) dans la direction de leur axe longitudinal commun et parallèlement à une des parois latérales talutées (10), entre une position près du creux (3) pour la pompe et une position près de la couronne (100) du réservoir.

19. Dispositif selon la revendication 18, **caractérisé en ce que** ladite pompe à vis excentrée (84) est arrangé sur un chariot roulant (199) avec le dispositif d'homogénéisation (83), ledit chariot roulant (199) pouvant être déplacé sur une des parois latérales talutées (10) et bloqué en utilisant un câble.
